# EUROPEAN PATENT APPLICATION

(11) **EP 0 745 452 A1**
(43) Date of publication of application: **04.12.1996**
(21) Application number: 96400223.2
(22) Date of filing: 01.02.1996
(51) Int. Cl.: B23K 35/40, C22C 1/10, C22C 32/00, B23K 11/30

(54) **Material and process for manufacturing resistance welding electrodes**

(30) Priority: 02.06.1995 KR 9502088
(71) Applicant: KOREA INSTITUTE OF MACHINERY & MATERIALS, Taejon (KR)
(72) Inventor: Moon, Jung-Gi, Yu Sung Gu, Taejon (KR)
(74) Representative: Orès, Bernard

(57) **Abstract**

The present invention relates to the methods for the manufacture of the electrode material applicable to special bonding of the light metal elements or the spot resistance welding ,and also of the electrode itself.

Those methods include the annealing treatment process which heats Cu-Al alloy metal and anneals in the vacuum state, the pretreatment reduction process generating pure Cu-Al alloy without the oxide by reducing the Cu-Al alloy powder which is annealed as above in the hydrogen atmosphere at 400∼500o C, the first oxidizing process which oxidizes the surface by heating above mentioned Cu-Al alloy without oxide in the air or oxygen atmosphere at 400∼500o C, the internal oxidizing process which Al in Cu-Al alloy powder is internally oxidized by heating above Cu-Al alloy powder oxidized at the first oxidizing process in the inert gas atmosphere at 900∼1000o C, and further the reduction process reducing above internally oxidized Cu-Al203 alloy powder in the hydrogen atmosphere.

In summary the method for manufacturing the electrode material of Cu-Al203 powder through above mentioned various processes and for the electrode of it could be achieved.

## Description

### Background of the Invention

The invention relates to the method for forming the electrode material and manufacturing the electrode for the purpose of special bonding the light metal group or spot resistance welding and also to the manufacturing method of resistance welding electrode of the above electrode material.

The electrode applied to special bonding for the light metals and specially surface treated steel plates or the one applied to resistance welding (hereinafter called electrode) is to maintain the special characteristics of high temperature resisting strength ,good electrical and heat conductivity, wear resistance etc (those of electrode). To form the electrode provided with such electrode characteristics the material itself thereof also must require not only the characteristics of high temperature resisting strength, electric conductivity, heat conductivity but also the homogeneity for the uniform structure and good workability under the various conditions. The electrode with good characteristics could be formed only from the electrode material of such various good special features, and also by using such electrode easier and better working for the welded parts could be achieved..

And as the resistance welding electrode during welding work functions fusion bonding of the welded part as well as transferring the electric current to the part as an electric conductor the electrode provided with such characteristics compatible with the variety for the welded parts and the welding conditions should be chosen. In general the electrode under operating conditions exposed to cyclic high temperature and pressure in succession requires high temperature resisting strength as well as electrical characteristics meeting the electric conductivity specially at the high temperature. To sustain the resistance welding electrode applied for the longer time at such high temperature and pressure conditions , the electrode of material metal basically requires the characteristics of low ability to seize with the metal of welded elements material as well as its low degree of diffusion

Therefore at the initial stage of applied electric resistance welding pure copper of high electric conductivity, good workability , anti corrosive for its electrode was mostly utilized , however it had a weakness of low mechanical strength.

For the purpose of improving above mentioned weakness , the dispersion strengthened alloys utilizing the metal phase as the dispersion material by adding a little quantity of each Cr, Zr ,Be, Si, Ni, W etc to the base metal of Cu had been developed, however such alloys have the problem of poor uniform characteristics to heat resistance, electric and heat conductivity provided only with a limited electrode quality.

For example, Cu-Cr alloy giving most weight in all the dispersion strengthened alloys as the current resistance welding electrode material which fine Cr precipitation phase of less 2wt% is distributed in the Cr base resulting in solidifying is manufactured by the typical casting method. The high temperature state due to the arc heat generating during welding work utilizing the electrode from drawing, rolling or forging process on the basis of the above mentioned Cu-Cr alloy results in coarsening of Cr precipitation phase and the growth of Cu base phase to cause trouble such as deteriorating thermal stability of the electrode and further declining the material life.

As a solution for improving the problem of such Cu-Cr Alloy , the dispersion strengthened Copper to oxide origin containing oxide dispersion phase has been developed. Cu-Al2 , Cu-SiO2, Cu-ZrO2 and the like are some examples of such dispersion strengthened Cu origin. As Cu-Al2O3 out of those alloys has been identified the most effective dispersion strengthened material, various studies for such dispersion strengthened Copper(Cu-Al2O3) including Al2O3 have been made.

The dispersion strengthened Copper(Cu-Al2O3) to Al2O3 origin is manufactured by combining powder metallurgy and internal oxidation process. At first spherical Cu-Al alloy powder which is formed by the atomization process through inducing and heating Cu-Al alloy is mixed with oxidized copper(Cu2O) powder ,and such mixed Cu-Al powder is internally oxidized in the oxygen gas atmosphere which volume of oxygen(O2) is properly adjusted. Selectively oxygen is combined with Al atom to form Al2O3 phase in the Cu powder. During internal oxidation Cu2O oxidizing agent is dissolved into Cu and O2 to be diffused into Cu-Al powder ,during which time the oxygen gas is diffused into the powder reacting and combining with Al atom to form the oxidized aluminum phase(Al2O3) in the Cu powder and to generate Cu- Cu-Al2O3 applicable to the material for manufacture of the electrode.

Such dispersion strengthened copper(Al2O3) to the Al2O3 origin maintains superior creep resistance which characteristics is kept at the high temperature, and also Cu-Al2O3 alloy is intended for welding electrode in view of little declining the electric conductivity due to the thermodynamic characteristics in that Al2O3 dispersion phase do not exist as the solid solution in the Cu base.

Thus in case of manufacturing the electrode of dispersion strengthened copper by the above mentioned method, Cu-Al2O3 powder which is internally oxidized is reheated again at the reduction gas atmosphere peeling the oxidation film for powder off. After Cu-Al2O3 powder free from above film is heat extruded at temperature 760oC∼927oC it is again drawn or forged producing the electrode tip in the required form (for example cone form ).

However the dispersion strengthened copper to Al2O3 origin in internal oxidizing by mixing the relevant volume of oxidizer Cu2O in Cu-Al powder followed by heating at the high temperature ,due to its delicate mixing procedure with the proper volume of Cu2O for controlling the internal oxidation state, is unable to fine the oxide and uniform dispersion. Therefore in case of manufacturing the electrode by each process of extrusion, drawing, or forging of above Cu-Al2O3 powder ,such product has not only poor workability but also insufficient structure fineness together with lowering strength to result in the problem in obtaining the electrode provided with good uniformity.

### SUMMARY OF THE INVENTION

Therefore the objective of the present invention is to provide the electrode of good characteristics and the manufacturing technology of the electrode material processed by surface oxidizing the pure Cu-Al alloy powder at the first stage followed by internal oxidizing at the second stage..

The other objective for the present invention is to provide the electrode which is capable of better improving the workability and bonding capability during forming the specified electrode of such electrode material free from the oxide existing on the Cu-Al2O3 surface by reducing the electrode of Cu-Al2O3 powder generated from the first oxidation and the second internal oxidation treatment for Cu-Al alloy powder.

The electrode according to the present invention is to form Cu-Al alloy powder through melting Cu and Al, and the injection process , which is annealed and is reduced at the hydrogen atmosphere and to form pure Cu-Al alloy powder free from oxide. The surface of such pure Cu-Al alloy powder is oxidized at the first stage and is again further heated at the high temperature in the inert gas atmosphere to internally oxidize Al in the Cu-Al alloy powder at second stage which result Cu-Al2O3 powder of homogeneous Al2O3 volume is formed. The electrode formed by above mentioned process is to provide with high temperature resistance, good electric and thermal conductivity.

Hereinafter the technique of manufacturing the electrode material and the electrode are described in details according to the claims of the invention as follows:

Cu and a little content of (0.1^{∼}5wt%) Al alloy is fed into to be heated and melted(melting process) followed by injecting the molten Cu-Al alloy through atomizing, Cu-Al alloy powder is formed. (atomizing process)

In the above processes for forming Cu-Al alloy those of melting and atomizing are in general applicable to the until recently known technology, however in case of existing oxide on the surface of Cu-Al alloy powder generated by the above processes such surface oxide should be removed sufficiently to form pure Cu-Al alloy powder.

In case Cu-Al alloy powder containing oxide on its surface is put into the next process of internal oxidizing treatment forming Cu-Al2O3 powder, it has not only difficulty of adjusting Al2O3 content in Cu-Al2O3 powder but also containing copper oxide(CuO, Cu2O) in Cu-Al2O3 powder may be possible. In case the resistance welding electrode containing such impurities is manufactured, it may cause the problem of very poor electric conductivity.

Therefore in case of generating its powder by atomizing Cu-Al alloy its pure alloy powder without oxide at all should be obtained and in case of existing oxide on the surface of Cu-Al alloy powder this always has to be removed.

As one of the method for removing the oxide on the surface of Cu-Al alloy powder which is generated by the above mentioned melting and atomizing processes :

As Cu-Al alloy powder containing oxide is heated at the temperature 700o C^{∼}900oC in the vacuum state and annealed, the internal stress existing in crystal grains of Cu-Al alloy powder is removed and they are fined. At the same time the closed oxidation film formation on the surface of Cu-Al alloy powder is relaxed for easy penetrating hydrogen(H2) into oxide existing in Cu-Al alloy powder at next reducing stage (Annealing process) followed by reducing Cu-Al alloy powder under hydrogen atmosphere at temperature 400^{∼}500oC , by which result pure Cu-Al alloy powder free from the oxide to obtain. (reduction stage of the forward process).

And as one of the other methods which obtains pure Cu-Al alloy powder by atomizing molten Cu-Al alloy, the atomizing process of Cu-Al alloy is implemented without oxygen by cutting off inflow of it (O2) during forming of Cu-Al alloy powder dispersion (atomizing process at non oxygen atmosphere). As such Cu-Al alloy powder obtained from the atomization process at atmosphere free from oxygen is heated in the vacuum state for annealing (annealing process in the vacuum) ,pure Cu-Al alloy powder directly without passing through the previous reducing process could be obtained.

However as the processes for providing such continual atmosphere as atomizing at non oxygen state and for annealing in the vacuum face various complicated problems, and such may cause higher cost factor for maintaining the manufacturing procedures, it is recommendable to choose the reasonable ones in compliance with the economy and easy manufacturing technique for the purpose of getting pure Cu-Al alloy power.

In case the pure Cu-Al alloy powder free from oxide is heated at the temperature 400^{∼}500o C in the air or oxygen the surface oxidizing of Cu-Al alloy powder is progressed(first oxidizing stage )which first detailed test data is shown as an example:

The measuring result after Cu-Al alloy powder of 100g in the constant-temperature oven heated for 5 minutes at the temperature 400^{∼}500o C in the ambient air or oxygen is taken out from it showed the achieving of sufficient oxidation on the surface of the Cu-Al alloy powder(2Cu + 1/2O2 Cu2O).

As the Cu-Alloy powder which oxidation process is finished is reheated at the temperature 900o ^{∼}1000o C in the inert gas atmosphere such as Argon or Helium for 0.5^{∼}1 hours so that Al in the Cu-Al alloy powder may be internally oxidized(second stage of oxidation)(Cu2O 2Cu + 1/2O2, 2Al + 2/3O2 2 Al2O3) the volume of Al2O3 is uniformly adjusted and also the electrode material as Cu-Al2O3 powder form of good quality is obtained.

Internally oxidized alloys are a special type of precipitation-hardened alloys. These are two-phase systems which are hardened by the presence of hard inclusions of the second phase(namely the oxide particles). particle).

Stability of the structure of precipitation-hardened alloys is determined from the degree of diffusion. Namely the atomic exchange between the inclusions of the second phase and the alloy determines the stability of the structure.

High thermal stability of the structure is certainly achieved if the hardening phase is high-melting compound which does not contain the atoms of the alloy base metal. In such case oxides are the most high-melting of chemical compounds.

Higher degree of dispersion of the particles of hardening phase distinguishes internally oxidized alloy from the alloys of SAP type(Sintered Aluminum Products). This makes it possible to obtain the alloys of high strength with low volume content of hardening phase(Al2O3 3). The latter provides high values of electric and heat conductivity of the alloys ,which are almost similar to those of pure copper..

Internal oxidation is conducted with the alloys whose metal-base dissolves oxygen, the absolute value of free energy of formation-F oxide of the component of alloy being far in excess of the value for the alloy base metal. The reaction of oxide formation is accompanied by heat loss. If the pressure of oxygen-O2 at the alloy surface is equal to that of dissociation of metal-alloy base oxide, then without oxidizing the alloy base metal the oxygen diffuses in the alloy. ..

The partial pressure of oxygen: PO2 at the sample surface at temperature of internal oxidation is determined by the equilibrium constant of the following reaction:$\text{Cu2O= 2Cu + 1/2 O2}$

The equilibrium constant - KP is determined from the following expression$\text{logKP=-FT/(2.303RT),}$

FT is the change in the free energy which accompanies the reaction at T. Since Cu2O and Cu are used in condensed state, then$\text{K p = PO21/2[K p = P2Cu. PO21/2/ (PCu2O)]}$ is formulated.

In the process of internal oxidation pressure of oxygen at the material surface is constant, its solvability in the sample is proportional to the square root of PO2 according to Henrys law. If the pressure is no more than the partial pressure of lower oxide such as Al2O3 or BeO etc of the alloy base metal, then no external scale forms. For internal oxidation in case the oxygen pressure on the surface of the material is constant the solvability of the oxygen for the sample is in accordance with Henrys Law and thus the surface is usually oxidized at the temperature at which it in the alloy base is negligible. Resulting oxide film is firm enough not to peel off the surface.

Next to formation of the oxide film raising the temperature, oxygen absorbed at the sample surface diffuse inside ,meets the atoms of powerful oxidizing components of alloy and enters into reaction with them , forming the molecules of oxide. The process of internal oxidation takes place at last..

The size of the oxide particles of hardening alloys depends on both process temperature and concentration of oxidizing agent.(the oxidizing agent formed at the first treatment).

In case of oxide on the surface of Cu-Al2O3 powder of electrode material of which specified profile of electrode is formed exists as it hinders bonding between each metal powder particle, reduction process by removing it at the temperature 400^{∼}500o C for 0.5 hours in the hydrogen atmosphere and further cooling off down to the room temperature in the same atmosphere is carried out to get such electrode (reduction process). Based on the above mentioned material it would be possible to obtain the electrode of better workability and fine structure.

How to choose the relevant manufacturing method for the superior electrode based on aforementioned material might be very important factor.

The other purpose of the present invention based on the good quality of Cu-Al2O3 out of which Al2O3 volume is uniformly adjusted and has a good workability is to form the electrode by the exploding and pressing process of the material which is pressed and solidified through the shock wave load from exploding the explosives and thereby to provide a method manufacturing the good quality of electrode with strength of better welding workability (fusion bonding force) for the welded elements, maintaining low degree of diffusion during the operation at the high temperature and pressure.

The practical examples for the application of the present invention are in details described on hand in drawings as the following: The present invention proposes two exploding and pressing methods of Cu-Al2O3 powder. The one is to press flat mostly as the plate form of the powder in the base material by transferring the high potential energy erupted from the shock wave by exploding explosive to the flyer plate ,and the other ,to solidify mostly the bar type electrode in the pipe form of container by the shock wave erupted from exploding explosives.

### Brief Description of the Drawings

Fig. 1 shows the layout for mounting metal powder together with explosives on the exploding cladding device.

Fig. 2 shows the flow chart pressing the electrode of plate form processed by the exploding and cladding device.

Fig. 3 shows the layout mounting metal powder together with the explosives on the exploding cladding device.

Fig. 4 shows the cross section of A-A for Fig. 3.

Fig. 5 shows the flow chart for each process pressing the electrode of bar form by the exploding and cladding .

### Detailed Description of the Invention

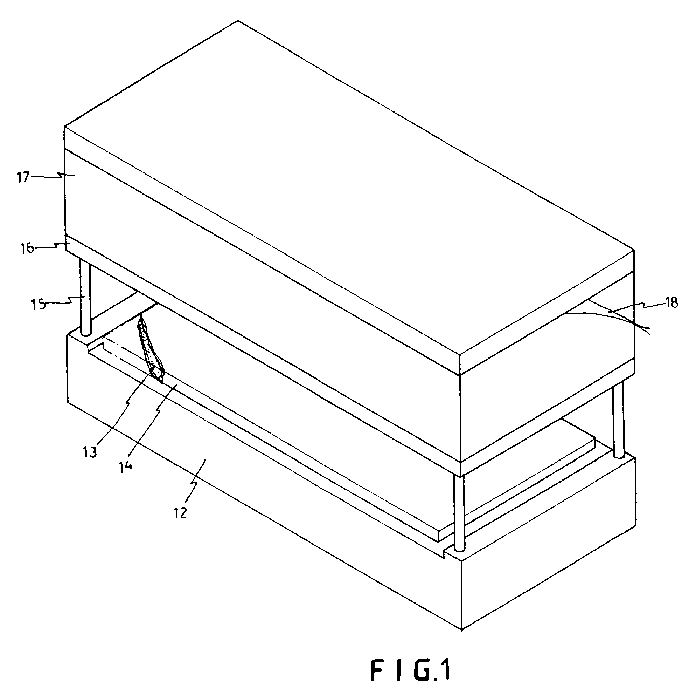

As shown in Fig.1 the powder container(14) filled with Cu-A1203 powder(13) formed by the above mentioned process in the base plate(12) is mounted and over the container(14) by installing the flyer plate(16) maintaining the stand off(15) which role is to keep the specified gap in between and to let it (16) sustain the specified kinetic energy. At the same time the base plate(12) and flyer plate(16) each are to be placed against each other at a specified distance off. On the flyer plate(16) the high explosives (17) of powder or sheet form is mounted, on which a detonator(18) is connected for preparing exploding(explosive mounting process).

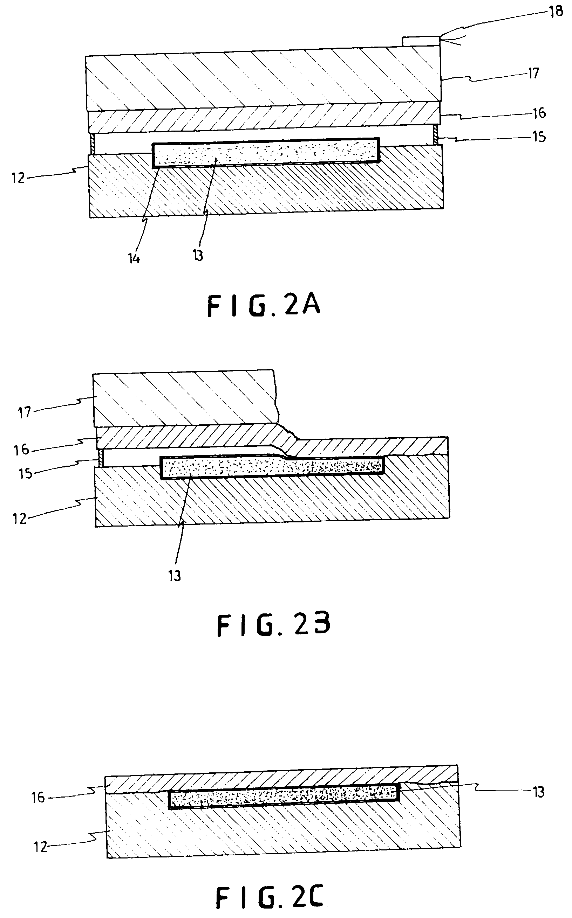

Fig.2 shows the flow chart for the process of exploding and pressing the plate form of electrode by igniting the detonator to the exploding device which explosive mounting process is finished. The explosives on the one side being exploded by the detonator, the flyer plate is impacted on the base plate at an specified angle by the exploding pressure(shock wave) and the plate form of electrode from bonding action between each particle of Cu-Al2O3 in the base plate is built up.

As aforementioned process is achieved in a moment the metal portion in the near of the impacting point is in flowing state from which the metal jet flow is generated at the front of that point.

This jet flow leads to remove the impurities on the boundary plane of each powder particle to get the clean surface from which developing the strong plastic deformation only at a nearby cladding boundary plane is bonded and this moment the cladding boundary surface shows a special wave pattern.

The exploding pressure during the process generates the strong shock wave of 6 Gpa(Giga Pascal) by which the impacted and pressed plane is of explosive cladding. This method could achieve the monolithic electrode material which particle deformation of fungoid shape as a proof of dynamic compacting regime indicates cladding due to localization of flow at the contacting plane between each particle boundary..

The electrode material manufactured under such explosive compacting process showed the density of 95^{∼}98 % for pure copper measured by the Hydrostatic Weighing.

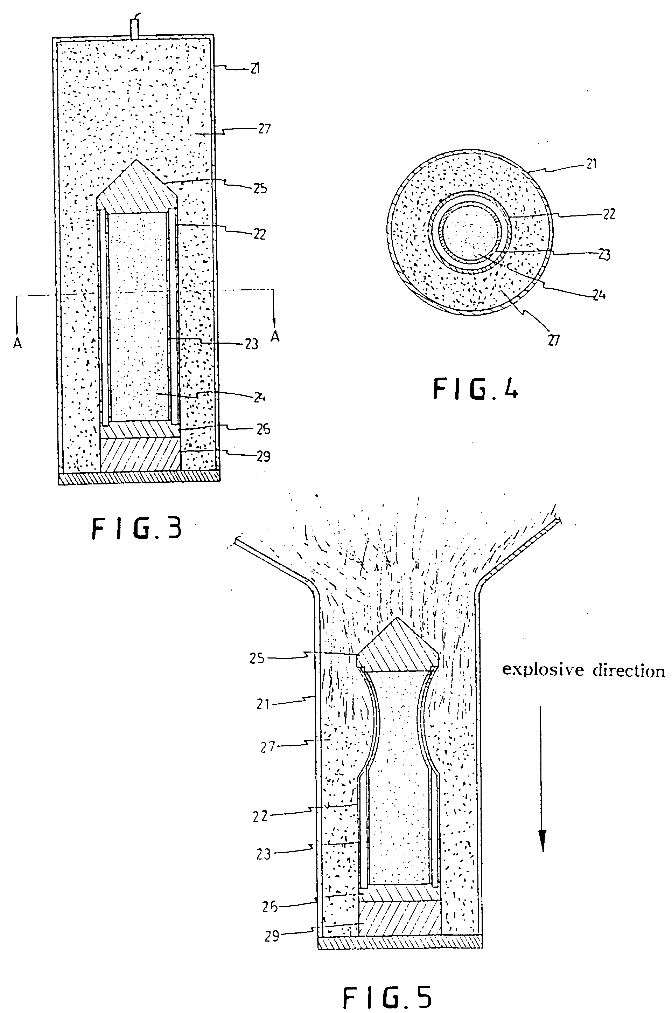

Fig.3^{∼}Fig.5 show the forming process for the bar type electrode of explosive compacting Cu-Al2O3 powder.

As shown in Fig.3, in the explosives container(21) of double cylindrical structure, the flyer tube(22) is mounted and into the powder container(23) Cu-Al2O3 powder(24 metal powder) of the electrode material is charged and both end portions for the powder container(23) with the plugs(25,26) are sealed. This container(23) is mounted on the support(29) maintaining a specified gap in the flyer tube(22). Between the above mentioned flyer tube(22) and explosives container(21) the explosives(27) is charged at which one end portion the detonator(28) is installed (explosives installing process).

After finishing such explosives installing process, the detonator is ignited in an instant and at the same time exploding at the one side of the explosives generates the shock wave which advance is transferred in an instant shock speed(exploding speed) in the longitudinal direction of the flyer tube(22) (explosive compacting process).

As a result of such explosion ,the flyer tube and Cu-Al2O3 powder therein is concentrically compacted by the shock wave which narrows the gap between each metal powder particle and transfers the shock energy to the surface of each metal powder particle in an instant.

This reaction is almost similar to those of the isentropic process. If the generating and transfer procedures for the shock energy is achieved in slow speed, the heat is transferred from the environment into the metal powder particle which result shows a negative trend such as fusion through an instant change of original electrode material characteristics.

Thus in the exploding process according to the present invention the target for maintaining the superior quality of the electrode can be achieved by means of transferring the shock wave energy through the metal powder in a few micro seconds.

However the shock wave strength generated during the exploding process is recommendable to choose enough to bond the powder and also should not be very high to crack the compacted forming part due to over fusion and incidental reaction. According to the result of the experiment the exploding speed for shock wave transfer ranges from **1600**m/sec to **8400**m/sec, however **2000**m/sec^{∼}**3000**m/sec for the optimum speed is recommended

And the exploding pressure generated at this moment is ranging between 5^{∼}500kbar is estimated, however 10^{∼}300kbar(from 1Gpa to 30Gpa) is recommendable.

## Claims

1. The Cu-Al alloy powder is characterized in that it is annealed in the vacuum state and such powder without the oxide is generated by the reduction process in the hydrogen atmosphere at temperature 400^{∼}500oC. Such Cu-Al alloy powder free from the oxide is heated in the oxygen atmosphere at 400^{∼}500o C and the surface thereon is oxidized. After the oxidized Cu-Al alloy powder is reheated in the inert gas atmosphere at 900^{∼}1000o C to be oxidized, the electrode of Cu-Al2O3 powder is obtained by reducing the internally oxidized alloy powder in the hydrogen atmosphere.

2. A manufacturing method of the electrode material of Cu-Al2O3 is characterized in that the Cu- Alloy powder is treated by the following processes :
(1)The heat treatment process annealing Cu-Al alloy powder in the vacuum state.
(2)The pretreatment process generating pure Cu-Al alloy metal free from oxide by reducing the above annealed Cu-Al alloy powder in the hydrogen atmosphere at 400o ^{∼}500o C.
(3)The first step of oxidation process oxidizing the surface by heating the above mentioned Cu-Al metal alloy without oxide in the air or the oxygen atmosphere at 400^{∼}500o C
(4)The internal oxidation process of getting Al in Cu-Al alloy metal powder oxidized internally by heating above mentioned Cu-Al alloy metal powder passing above first step in the inert gas atmosphere at 900o^{∼}1000o C
(5)The reduction process reducing the aforementioned internally oxidized Cu-Al2O3 metal alloy powder in the hydrogen atmosphere.

3. The method for the manufacture of plate formed resistance welding electrode is characterized in that the electrode material of the aforementioned Cu-Al2O3 powder is processed according to the following exploding cladding procedure:
(1)The process installing the explosives by mounting the powder container in the base plate into which the aforementioned reduced Cu-Al2O3 powder is charged ,mounting the flyer plate at a specified gap with the stand off, and setting the explosives and the detonator on the flyer plate.
(2)The exploding and compacting process which in case the detonator after preparing above mentioned explosive mounting process is ignited and exploded from the one side of the explosives, the flyer plate is compacted on the base plate by the exploding pressure(shock wave) and Cu-Al2O3 powder is deformed of compacted and solidified plate type electrode.

4. The method for the manufacture of bar type resistance welding electrode of above Cu-Al2O3 powder is characterized in that it is processed as the following exploding and cladding:
(1)The explosives installing process which the reduced Cu-Al2O3 powder as above is charged into the metal container, mounted into the inner cylinder and explosives and detonator between the inner tube and explosives container is installed.
(2) The exploding and compacting process which Cu-Al2O3 powder is formed of the bar type electrode ,when the flyer tube is compacted by the explosive pressure(shock wave) generated from the one side of the explosive by igniting the detonator prepared by the above mentioned explosives installing device.
